# FASCICULE DE BREVET EUROPEEN

(11) **EP 1 741 601 B1**
(45) Date de publication et mention de la délivrance du brevet: **05.03.2008**
(21) Numéro de dépôt: 06291119.3
(22) Date de dépôt: 06.07.2006
(51) Int. Cl.: B60R 5/04

(54) **Dispositif de fixation de tablette, et tablette de véhicule automobile**
Befestigungseinrichtung für eine Abdeckplatte, und Abdeckplatte eines Kraftfahrzeugs
Fixation device for cover plate, and cover plate of a motor vehicle

(30) Priorité: 06.07.2005 FR 0507214
(43) Date de publication de la demande: 10.01.2007
(73) Titulaire: Faurecia Automotive Industrie, 92000 Nanterre (FR)
(72) Inventeur: Dahler, Christophe, c/o Faurecia, 08210 Mouzon (FR); Dautremont, Gilles, c/o Faurecia, 08210 Mouzon (FR)
(74) Mandataire: Arnaud, Jean

(56) Documents cités:
- WO-A-20/04074044
- US-A- 4 148 516
- US-B1- 6 508 499

## Description

La présente invention concerne un dispositif de fixation temporaire d'une tablette mobile de véhicule automobile selon le préambule de la revendication 1. Un tel dispositif est connu du document WO 2004/074044 A1.

Il est fréquent que le coffre à bagages d'un véhicule automobile soit fermé à sa partie supérieure par une tablette mobile ou amovible. Cette tablette peut être simplement retirée pour agrandir l'espace du coffre vers le haut, ou elle peut normalement pivoter autour d'un axe proche de son bord interne. Une partie latérale de la tablette, distante de l'axe de rotation, est habituellement en appui sur un organe quelconque permettant le support du poids de la tablette chargée, ou non.

Pour que la tablette soit appuyée sur un axe, on pourrait simplement découper une encoche à un bord de la tablette afin que l'encoche vienne chevaucher l'axe. Cependant, étant donné la nature du matériau dont sont constituées ces tablettes, il serait difficile d'obtenir, par simple formation d'une encoche, le respect des tolérances nécessaires à l'obtention d'une bonne tenue sur l'axe. En outre, comme toute la charge serait concentrée sur les encoches, la tablette pourrait être détériorée.

On peut donc envisager de munir l'encoche formée à un bord de la tablette d'un dispositif de fixation dont le rôle est d'augmenter la résistance mécanique du bord de la tablette. Cependant, comme l'épaisseur d'un bord de tablette peut varier, il faudrait disposer de dispositifs de toute une gamme de dimensions.

On connaît déjà des dispositifs permettant un réglage d'une dimension par utilisation d'une griffe qui vient s'enclencher sur différentes dents d'une denture portée par un élément dont la position est réglable dans la direction d'allongement de la denture.

Ainsi, le document EP-1 158 184 décrit un support de lampe dans lequel une première partie est tenue par une griffe élastique qui vient s'enclencher entre deux dents d'une denture formée sur une autre pièce. L'espace entre les deux pièces est déterminé par les dents particulières avec lesquelles coopère la griffe. Un tel dispositif de raccordement réglable par encliquetage déjà connu peut être avantageusement mis en oeuvre dans le cas du dispositif de fixation temporaire concerné.

L'invention concerne un dispositif de fixation temporaire d'une telle tablette, pouvant être utilisé soit à l'emplacement du bord pivotant de la tablette, soit à un emplacement de support. Plus précisément, la carrosserie du véhicule porte au moins un axe, et une encoche en Ω est formée au bord de la tablette pour venir chevaucher l'axe correspondant et possède un dispositif de fixation qui s'adapte à l'épaisseur de la tablette et qui assure une coopération mécanique précise et fiable avec l'axe, avec un faible coût.

Un dispositif selon l'invention est défini dans la revendication 1.

De préférence, l'élément qui délimite le rétrécissement comporte, en plus de sa joue, une languette élastiquement déformable en Ω, solidaire de la joue sur laquelle elle est tenue à ses extrémités proches du bord de la tablette et à une position opposée à ce bord, et destinée à se déformer élastiquement entre ses emplacements de tenue sur la joue. La languette peut être continue entre ses deux extrémités, ou elle peut être interrompue du côté opposé au bord de la tablette.

Dans une variante, la partie d'entrée et la partie de sortie de l'ouverture en Ω sont disposées mutuellement de manière que le déplacement de l'axe successivement dans les deux parties s'effectue dans au moins deux directions non alignées.

De préférence, les deux éléments comportent des organes coopérant par encliquetage dont l'un comporte au moins un bras allongé s'écartant de la joue et portant une denture ayant des dents disposées successivement dans la direction de la longueur du bras, et l'autre comporte une griffe rappelée élastiquement le bras et vers la denture. Il est en outre avantageux que la griffe soit rappelée en direction sensiblement parallèle à la longueur du bras sur une distance au moins égale au pas des dents de la denture, de sorte que les deux éléments peuvent être bloqués l'un sur l'autre avec un espacement variable de leurs joues. Dans un exemple, l'organe qui rappelle la griffe dans la direction de la longueur du bras comporte un doigt qui se déforme au contact de la tablette.

Dans un mode de réalisation, l'un des deux éléments comporte deux bras portant une denture et dont les largeurs sont différentes, l'autre élément a deux orifices adjacents chacun à une griffe, et la coopération des bras et des orifices n'est possible que dans une position relative unique des éléments.

Dans un autre mode de réalisation, l'un des éléments comporte en outre un embout de fixation qui s'écarte de la joue, et l'autre des éléments a un orifice en face de l'embout, la coopération de l'embout et de l'orifice déterminant une position unique de coopération des éléments.

L'invention concerne aussi une tablette mobile de véhicule automobile, qui comprend au moins un dispositif de fixation selon les paragraphes précédents et, en plus de l'encoche et à proximité de celle-ci, au moins un orifice destiné au passage d'un bras des organes coopérant par encliquetage.

Ainsi, un même dispositif de fixation peut être utilisé même lorsque l'épaisseur du bord de tablette est différente.

D'autres caractéristiques et avantages de l'invention seront mieux compris à la lecture de la description qui va suivre d'exemples de réalisation, faite en référence au dessin annexé sur lequel :
la figure 1 est une vue en perspective d'un premier élément d'un dispositif de fixation temporaire dans un premier mode de réalisation de l'invention ;
la figure 2 est une vue en perspective d'un second élément du dispositif de fixation, destiné à coopérer avec l'élément de la figure 1 ;
la figure 3 est un schéma d'un axe avec lequel peut coopérer un dispositif de fixation ;
la figure 4 est une coupe partielle représentant une fixation de tablette réalisée sur l'axe de la figure 3 avec un dispositif de fixation selon l'invention ;
la figure 5 est une vue en élévation d'un premier élément d'un dispositif de fixation temporaire dans un second mode de réalisation de l'invention ;
la figure 6 est une vue en plan du premier élément dans le second mode de réalisation de l'invention ;
la figure 7 est une vue en perspective du premier élément représenté sur les figures 5 et 6 ;
la figure 8 est une vue en élévation du second élément du dispositif de fixation temporaire dans le second mode de réalisation de l'invention ;
la figure 9 est une vue en plan du second élément dans le second mode de réalisation de l'invention ;
la figure 10 est une vue en perspective du second élément représenté sur les figures 8 et 9 ; et
la figure 11 représente schématiquement une autre forme d'ouverture.

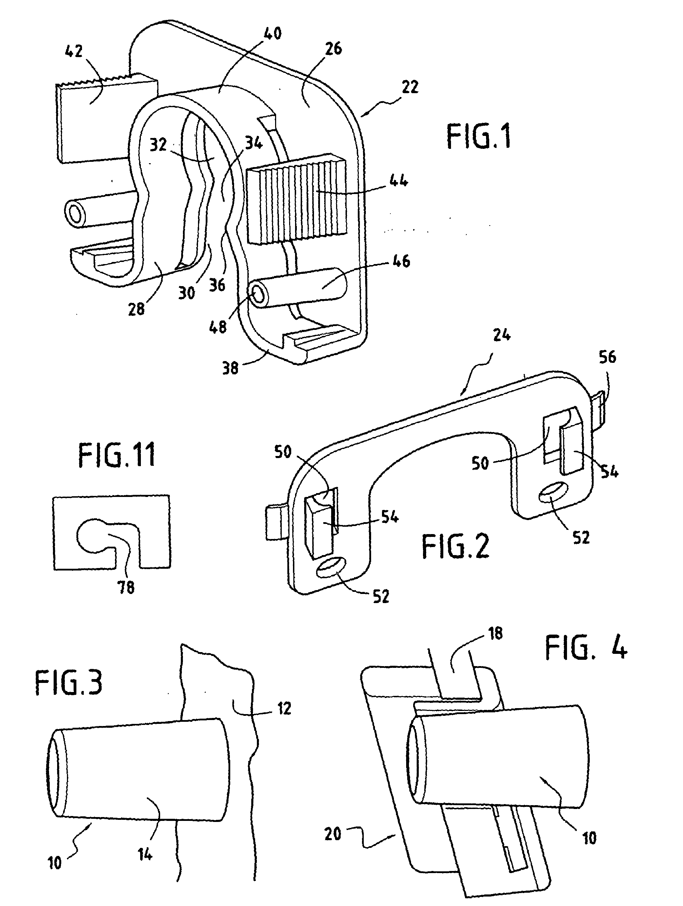

On décrit d'abord l'application de l'invention en référence aux figures 3 et 4.

La figure 3 représente un axe 10 fixé à une surface 12, par exemple d'une garniture arrière de coffre d'automobile. L'axe 10 représenté comporte un corps 14 de forme légèrement tronconique de section circulaire. Comme l'indique la figure 4, cet axe 10, pour pouvoir supporter le bord d'une tablette arrière 18, est chevauché par un dispositif de fixation temporaire 20 selon l'invention. On note sur la figure 4 que, si la tablette est levée, le dispositif de fixation 20 libère l'axe 10.

On décrit maintenant plus en détail un dispositif de fixation temporaire selon un premier mode de réalisation. Celui-ci est constitué de deux éléments, un premier élément 22 représenté sur la figure 1 et un second élément 24 représenté sur la figure 2.

Le premier élément 22 comporte une joue 26 qui est plane et est destinée à être appliquée contre une surface de tablette. Du côté destiné à être à l'intérieur du dispositif, la joue 26 porte une languette 28. Une ouverture de la joue et l'intérieur de la languette délimitent une ouverture en Ω qui comprend une partie d'entrée 30, une partie de logement 32 et, entre elles, une partie rétrécie 34 délimitée notamment par une saillie élastique interne 36 de rétrécissement de la languette.

La languette 28 est fixée à la joue d'une part à ses extrémités 38 destinées à être proches du bord de la tablette, et d'autre part à la partie supérieure 40. De cette manière, entre la partie supérieure 40 et les extrémités 38, la languette est désolidarisée de la joue 26 et peut donc fléchir élastiquement.

La joue 26 porte aussi deux bras allongés 42 qui s'écartent de la joue 26. Ces bras 42 sont munis, à leur face extérieure, d'une denture 44, chaque dent étant pratiquement parallèle à la joue. En outre, des embouts 46, représentés sous forme de cylindres, dépassent aussi de la joue 26 vers le côté intérieur et ont une extrémité 48 destinée à pénétrer dans un orifice coopérant.

La figure 2 représente le second élément 24 qui forme une joue constituée d'une plaque percée de deux ouvertures 50 destinées au passage des bras 44 de l'élément 22, et de deux trous 52 destinés au passage des extrémités 48 du premier élément 22.

Des griffes 54 sont tournées vers les ouvertures 50 afin qu'elles viennent s'appliquer élastiquement contre les dentures 44 de l'autre élément 22, dans la position de montage du dispositif de fixation. Des doigts 56 dépassent de la joue du côté tourné vers une surface de tablette. Ainsi, lorsque les deux éléments sont serrés l'un vers l'autre, chaque doigt a tendance à pousser la griffe associée vers la denture coopérante et à se déformer, en créant une contrainte élastique dans la direction d'assemblage des deux éléments et en donnant une plage de coopération élastique de la griffe et d'une dent sur une distance au moins égale au pas des dents de la denture.

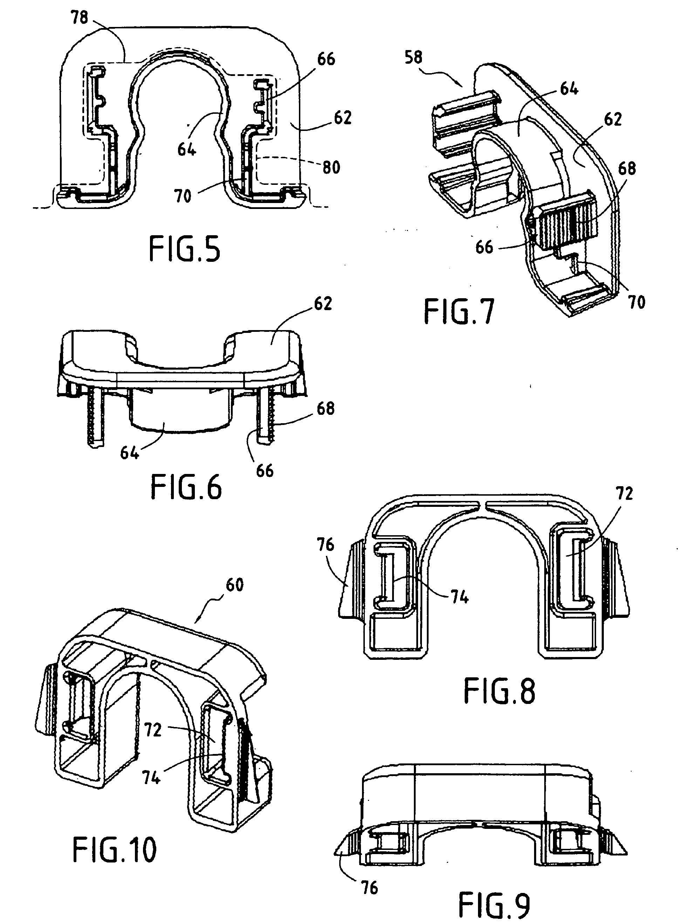

On décrit maintenant plus en détail un dispositif de fixation temporaire selon un second mode de réalisation, en référence aux figures 5 à 10. Celui-ci est constitué de deux éléments, un premier élément 58 représenté sur la figure 1 et un second élément 60 représenté sur la figure 2.

Le premier élément 58, représenté sur les figures 5 à 7, comporte une joue 62 qui est plane et est destinée à être appliquée contre une surface de tablette. Du côté destiné à être à l'intérieur du dispositif, la joue 62 porte une languette 64. Une ouverture de la joue et l'intérieur de la languette délimitent une ouverture en Ω qui comprend une partie d'entrée, une partie de logement et, entre elles, une partie rétrécie délimitée notamment par une saillie élastique interne de rétrécissement de la languette. La languette 64 est fixée à la joue d'une part à ses extrémités destinées à être proches du bord de la tablette, et d'autre part à la partie supérieure. De cette manière, entre la partie supérieure et les extrémités, la languette est désolidarisée de la joue et peut donc fléchir élastiquement. Ces caractéristiques sont analogues à celles du premier mode de réalisation.

La joue 62 porte aussi deux bras allongés 66 qui s'écartent de la joue 62. Ces bras 66 sont munis, à leur face extérieure, d'une denture 68, chaque dent étant pratiquement parallèle à la joue. En outre, des bras secondaires courts 70 sont destinés à être localement en appui contre la surface de tablette, sans pénétrer dans celle-ci, mais en créant un frottement qui, avec l'action des bras 66, verrouille le dispositif sur la tablette.

Le second élément 60, représenté sur les figures 8 à 10, forme une joue constituée d'une plaque percée de deux ouvertures 72 destinées au passage des bras 66 de l'élément 58. Des griffes 74 sont tournées vers les ouvertures 72 afin qu'elles viennent s'appliquer élastiquement contre les dentures 68 de l'autre élément 58, dans la position de montage du dispositif de fixation. Des doigts 76 dépassent de la joue du côté tourné vers une surface de tablette. Ainsi, lorsque les deux éléments sont serrés l'un vers l'autre, chaque doigt a tendance à pousser la griffe associée vers la denture coopérante et à se déformer, en donnant une plage de coopération élastique de la griffe et d'une dent sur une distance au moins égale au pas des dents de la denture.

Il faut noter, dans ce mode de réalisation, les largeurs différentes des deux bras 66 : ils permettent ainsi un détrompage, sans utilisation d'embouts tels que 46 du premier mode de réalisation.

Le dispositif des figures 5 à 10 est représenté avec une inclinaison telle que suggérée par la figure 4. Par rapport au premier mode de réalisation, il nécessite moins de découpe du bord de la tablette à proximité de l'encoche, lors du montage tel que décrit dans la suite.

Lorsqu'un dispositif de fixation temporaire selon l'invention doit être fixé à un bord de tablette, ce bord de tablette est d'abord préparé. Cette préparation comprend la découpe d'une encoche et le perçage de trous correspondant à la position et à la forme des bras 42, 66 de la joue 26, 62.

Le premier élément 22, 58 est alors monté au bord de la tablette par insertion latérale des bras 42, 66 dans des trous du bord de la tablette. Ensuite, du côté opposé de la tablette, l'élément 24, 60 est présenté de sorte que les extrémités des bras 42, 66 pénètrent dans les orifices 50, 72 et les griffes 54, 74 s'accrochent contre la denture, quelle que soit l'épaisseur du bord de tablette. L'élément 24, 60 est alors poussé afin que les doigts 56, 76 se déforment au contact de la tablette, si bien que le bord de la tablette est serré sans jeu entre les deux joues.

Dans le cas du dispositif des figures 5 à 10, on a représenté sur la figure 5, en traits interrompus, le bord 78 de l'ouverture formée dans le bord de la tablette. Des saillies 80 proches du bord de la tablette s'accrochent sous les bras 66 et retiennent ainsi fermement l'élément 58.

Bien qu'on ait décrit un mode de réalisation dans lequel un rétrécissement peut s'élargir élastiquement pour le passage de l'axe par déformation des deux côtés de la languette qui sont tenus de part et d'autre du rétrécissement, d'autres réalisations sont possibles. Il n'est pas nécessaire que la languette décrive entièrement la forme en Ω ; par exemple, les fonctions de blocage au fond de l'encoche et de formation du rétrécissement élastique peuvent être séparées, la première étant remplie par le fond de l'orifice de la joue et la seconde par deux languettes partielles qui se terminent avant le fond de la partie de logement.

Comme l'indique le second mode de réalisation, les deux embouts 46 du premier mode de réalisation ne sont pas toujours nécessaires, du moment que le blocage du dispositif sur la tablette est assuré. En outre, le nombre de bras 42, 66 peut aussi être différent de deux. Cependant, il est nécessaire qu'il en existe au moins un.

Quel que soit le mode de réalisation, il est avantageux que la direction d'alignement de l'ouverture en Ω soit perpendiculaire au bord des éléments qui suit le bord de la tablette. En effet, dans ce cas, un même dispositif de fixation peut être utilisé à droite et à gauche, c'est-à-dire à deux emplacements opposés de la tablette.

Bien qu'on ait décrit un dispositif à griffe s'accrochant sur une denture, d'autres dispositifs d'encliquetage peuvent aussi être utilisés.

Une caractéristique importante de l'invention porte sur l'ouverture en Ω débouchant du côté du bord de la tablette et comprenant, depuis ce bord, une partie d'entrée puis une partie de logement, ces deux parties étant reliées par un rétrécissement rappelé élastiquement vers une position rétrécie. On peut cependant envisager une forme coudée 78 telle qu'indiquée sur la figure 11, c'est-à-dire une forme analogue à celle d'une fente de montage en baïonnette : la partie d'entrée et la partie de sortie de l'ouverture en Ω sont disposées mutuellement de manière que le déplacement de l'axe successivement dans les deux parties s'effectue dans au moins deux directions non alignées. Une telle forme coudée délimite encore une "ouverture en Ω" par ses parties d'entrée, de logement et de rétrécissement.

## Revendications

1. Dispositif de fixation temporaire d'une tablette mobile (18) de véhicule automobile à un axe (10), le dispositif étant logé au moins en grande partie dans une encoche formée à un bord de la tablette et délimitant une ouverture en Ω débouchant du côté du bord de la tablette et comprenant, depuis ce bord, une partie d'entrée (30) puis une partie de logement (32), ces deux parties (30, 32) étant reliées par un rétrécissement (34) rappelé élastiquement vers une position rétrécie dans laquelle la largeur du rétrécissement est inférieure à une dimension correspondante de l'axe de fixation, et pouvant prendre une position élargie dans laquelle cette largeur de rétrécissement est supérieure ou égale à la dimension correspondante de l'axe (10), **caractérisé en ce que** le dispositif comprend deux éléments (22, 24 ; 58, 60) possédant chacun une joue destinée à s'appliquer contre l'une des surfaces opposées de la tablette à proximité de l'encoche, les deux joues étant sensiblement parallèles**.**

2. Dispositif selon la revendication 1, **caractérisé en ce que** l'élément qui délimite le rétrécissement (34) comporte, en plus de sa joue (26), une languette élastiquement déformable (28) en Ω, solidaire de la joue (26) sur laquelle elle est tenue à ses extrémités (38) proches du bord de la tablette et à une position (40) opposée à ce bord, et destinée à se déformer élastiquement entre ses emplacements de tenue sur la joue (26).

3. Dispositif selon la revendication 2, **caractérisé en ce que** la languette (28) est continue entre ses deux extrémités (38).

4. Dispositif selon l'une quelconque des revendications précédentes, **caractérisé en ce que** la partie d'entrée et la partie de sortie de l'ouverture en Ω (78) sont disposées mutuellement de manière que le déplacement de l'axe successivement dans les deux parties s'effectue dans au moins deux directions non alignées.

5. Dispositif selon l'une quelconque des revendications précédentes, **caractérisé en ce que** les deux éléments (22, 24 ; 58, 60) comportent des organes (42, 54 ; 66, 74) coopérant par encliquetage dont l'un comporte au moins un bras allongé (42, 66) qui s'écarte de la joue et portant une denture (44, 68) ayant des dents disposées successivement dans la direction de la longueur du bras, et l'autre comporte une griffe (54, 74) rappelée élastiquement vers le bras et vers la denture (44, 68).

6. Dispositif selon la revendication 5, **caractérisé en ce que** la griffe (54, 74) est en outre rappelée dans la direction de la longueur du bras (42, 66) sur une distance au moins égale au pas des dents de la denture (44, 68), de sorte que les deux éléments peuvent être bloqués l'un sur l'autre avec un espacement variable de leurs joues.

7. Dispositif selon la revendication 5, **caractérisé en ce que** l'organe qui rappelle la griffe (74) dans la direction de la longueur du bras comporte un doigt (76) qui se déforme au contact de la tablette.

8. Dispositif selon l'une des revendications 5 à 7, **caractérisé en ce que** l'un des deux éléments (58) comporte deux bras (66) portant une denture (68) et dont les largeurs sont différentes, l'autre élément (60) a deux orifices (72) adjacents chacun à une griffe (74), et la coopération des bras (66) et des orifices (72) n'est possible que dans une position relative unique des éléments.

9. Dispositif selon l'une quelconque des revendications 6 à 8, **caractérisé en ce que** l'un (22) des éléments comporte en outre un embout (46) de fixation qui s'écarte de la joue, et l'autre (24) des éléments a un orifice (52) en face de l'embout (46), la coopération de l'embout et de l'orifice déterminant une position unique de coopération des éléments.

10. Tablette mobile de véhicule automobile, **caractérisée en ce qu**'elle comprend au moins un dispositif de fixation selon l'une quelconque des revendications 6 à 9 et, en plus de l'encoche et à proximité de celle-ci, au moins un orifice destiné au passage d'un des organes (42, 66) coopérant par encliquetage.

## Claims

1. Device for temporarily fixing a movable shelf (18) of a motor vehicle to a shaft (10), the device being housed, at least for the most part, in a recess formed at an edge of the shelf and delimiting an Ω-shaped opening which opens on the side of the edge of the shelf and comprises, from that edge, an entry portion (30) and then a housing portion (32), the two portions (30, 32) being joined by a constricted portion (34) which is resiliently returned to a constricted position in which the width of the constricted portion is less than a corresponding dimension of the fixing shaft, and which is able to adopt a widened position in which the width of the constricted portion is greater than or equal to the corresponding dimension of the shaft (10), **characterised in that** the device comprises two elements (22, 24; 58, 60) each having a flange which is to be applied to one of the opposite surfaces of the shelf close to the recess, the two flanges being substantially parallel.

2. Device according to claim 1, **characterised in that** the element which delimits the constricted portion (34) comprises, in addition to its flange (26), a resiliently deformable Ω-shaped tab (28) which is integral with the flange (26) on which it is held at its ends (38) close to the edge of the shelf and at a position (40) remote from the edge, and which is to deform resiliently between the locations at which it is held on the flange (26).

3. Device according to claim 2, **characterised in that** the tab (28) is continuous between its two ends (38).

4. Device according to any one of the preceding claims, **characterised in that** the entry portion and the exit portion of the Ω-shaped opening (78) are mutually arranged in such a manner that the displacement of the shaft in the two portions in succession is effected in at least two non-aligned directions.

5. Device according to any one of the preceding claims, **characterised in that** the two elements (22, 24; 58, 60) comprise members (42, 54; 66, 74) which cooperate by means of a snap fit, one of which members comprises at least one elongated arm (42, 66) which projects from the flange and carries a toothed portion (44, 68) having teeth which are arranged in succession in the direction of the length of the arm, and the other comprises a catch (54, 74) which is resiliently returned towards the arm and towards the toothed portion (44, 68).

6. Device according to claim 5, **characterised in that** the catch (54, 74) is additionally returned in the direction of the length of the arm (42, 66) over a distance which is at least equal to the pitch of the teeth of the toothed portion (44, 68), so that the two elements can be locked together with variable spacing between their flanges.

7. Device according to claim 5, **characterised in that** the member which returns the catch (74) in the direction of the length of the arm comprises a finger (76) which is deformed when it comes into contact with the plate.

8. Device according to any one of claims 5 to 7, **characterised in that** one of the two elements (58) comprises two arms (66) which carry a toothed portion (68) and the widths of which are different, the other element (60) has two orifices (72) each adjacent to a catch (74), and cooperation between the arms (66) and the orifices (72) is possible only in a single relative position of the elements.

9. Device according to any one of claims 6 to 8, **characterised in that** one (22) of the elements further comprises a fixing pin (46) which projects from the flange, and the other (24) of the elements has an orifice (52) opposite the pin (46), cooperation of the pin and the orifice determining a single cooperating position of the elements.

10. Movable shelf for a motor vehicle, **characterised in that** it comprises at least one fixing device according to any one of claims 6 to 9 and, in addition to the recess and close thereto, at least one orifice for the passage of one of the members (42, 66) cooperating by means of a snap fit.

## Patentansprüche

1. Vorrichtung zum vorübergehenden Befestigen einer beweglichen Abdeckplatte (18) eines Kraftfahrzeuges an einer Achse (10), wobei die Vorrichtung mindestens zum großen Teil in einer Nut untergebracht ist, welche an einem Rand der Abdeckplatte gebildet ist und eine Öffnung in Form eines Ω begrenzt, die auf der Seite des Randes der Abdeckplatte mündet, und von diesem Rand aus einen Zutrittsteil (30) und dann einen Aufnahmeteil (32) aufweist, wobei diese zwei Teile (30, 32) durch eine Verengung (34) verbunden sind, die elastisch zu einer verengten Position hin zurückgeholt werden kann, in welcher die Breite der Verengung kleiner als eine entsprechende Abmessung der Befestigungsachse ist, und die eine verbreiterte Position einnehmen kann, in welcher diese Verengungsbreite größer oder gleich der entsprechenden Abmessung der Achse (10) ist, **dadurch gekennzeichnet, daß** zwei Elemente (22, 24; 58, 60) jedes eine Seitenwand besitzt, die dazu bestimmt ist, sich gegen eine der gegenüberliegenden Oberflächen der Abdeckplatte in der Nähe der Nut aufzubringen, wobei die zwei Seitenwände im wesentlichen parallel sind.

2. Vorrichtung nach Anspruch 1, **dadurch gekennzeichnet, daß** das Element, welches die Verengung (34) begrenzt, zusätzlich zu seiner Seitenwand (26) eine als Ω verformbare elastische Zunge (28), die mit der Seitenwand (26) formschlüssig verbunden ist, aufweist, auf welcher sie an ihren dem Rand der Abdeckplatte nahen Enden (38) und an einer diesem Rand gegenüberliegenden Position (40) gehalten wird, und dazu bestimmt ist, sich elastisch zwischen ihren Halteplätzen auf der Seitenwand (26) zu verformen.

3. Vorrichtung nach Anspruch 2, **dadurch gekennzeichnet, daß** die Zunge (28) zwischen ihren beiden Enden (38) durchgehend ist.

4. Vorrichtung nach einem der vorhergehenden Ansprüche, **dadurch gekennzeichnet, daß** der Zutrittsteil und der Austrittsteil der Öffnung als Ω (78) wechselseitig so angeordnet sind, daß sich die Verschiebung der Achse in den zwei Teilen aufeinanderfolgend in mindestens zwei nicht ausgerichteten Richtungen vollzieht.

5. Vorrichtung nach einem der vorhergehenden Ansprüche, **dadurch gekennzeichnet, daß** die zwei Elemente (22, 24; 58, 60) Organe (42, 54; 66, 74) aufweisen, die durch Einrasten zusammenwirken, von denen eines mindestens einen länglichen Arm (42, 66) aufweist, der sich von der Seitenwand entfernt, und eine Zahnung (44, 68) mit Zähnen trägt, die nacheinander in der Richtung der Länge des Arms angeordnet sind, und der andere Arm einen Greifer (54, 74) aufweist, der elastisch zu dem Arm und der Verzahnung (44, 68) zurückgeholt wird.

6. Vorrichtung nach Anspruch 5, **dadurch gekennzeichnet, daß** der Greifer (54, 74) ferner in die Richtung der Länge des Arms (42, 66) auf einen Abstand zurückgeholt wird, der mindestens gleich der Teilung der Zähne der Zahnung (44, 68) ist, so daß die zwei Elemente mit einem variablen Abstand von ihren Seitenwänden aufeinander blockiert werden können.

7. Vorrichtung nach Anspruch 5, **dadurch gekennzeichnet, daß** das Organ, welches den Greifer (74) in der Richtung der Länge des Arms zurückholt, einen Finger bzw. Zapfen (76) aufweist, der sich in Kontakt mit der Abdeckplatte verformt.

8. Vorrichtung nach einem der Ansprüche 5 bis 7, **dadurch gekennzeichnet, daß** eines der zwei Elemente (58) zwei Arme (66) aufweist, welche eine Zahnung (68) tragen, und deren Breiten unterschiedlich sind, wobei das andere Element (60) zwei Öffnungen (72) hat, die jede neben einem Greifer (74) liegt, und wobei das Zusammenwirken der Arme (66) und der Öffnungen (72) nur in einer einzigen relativen Position der Elemente möglich ist.

9. Vorrichtung nach einem der Ansprüche 6 bis 8, **dadurch gekennzeichnet, daß** eines (22) der Elemente ferner ein Ansatzstück (46) zur Befestigung aufweist, das sich von der Seitenwand entfernt, und das andere (24) der Elemente eine Öffnung (52) gegenüber dem Ansatzstück (46) hat, wobei das Zusammenwirken des Ansatzstückes und der Öffnung eine einzige Position der Zusammenwirkung der Elemente bestimmt.

10. Bewegliche Abdeckplatte für ein Kraftfahrzeug, **dadurch gekennzeichnet, daß** sie mindestens eine Befestigungsvorrichtung nach einem der Ansprüche 6 bis 9 und zusätzlich zu der Nut und in der Nähe dieser mindestens eine Öffnung aufweist, die für den Durchgang eines der Organe (42, 66) bestimmt ist, die durch Einrasten zusammenwirken.
